# EUROPÄISCHE PATENTSCHRIFT

(11) **EP 3 495 561 B1**
(45) Veröffentlichungstag und Bekanntmachung des Hinweises auf die Patenterteilung: **01.12.2021**
(21) Anmeldenummer: 18200842.5
(22) Anmeldetag: 16.10.2018
(51) Int. Cl.: E02B 17/00, E06C 1/36, E06C 7/18, E06C 9/02

(54) **PLATTFORMANORDNUNG, OFFSHORE-BAUWERK, VERFAHREN ZUM INSTALLIEREN EINER PLATTFORMANORDNUNG**
PLATFORM ASSEMBLY, OFFSHORE STRUCTURE, METHOD FOR INSTALLING A PLATFORM ASSEMBLY
ENSEMBLE PLATE-FORME, STRUCTURE OFFSHORE, PROCÉDÉ D'INSTALLATION D'UN ENSEMBLE PLATE-FORME

(30) Priorität: 18.10.2017 DE 102017009682
(43) Veröffentlichungstag der Anmeldung: 12.06.2019
(73) Patentinhaber: Senvion GmbH, 22297 Hamburg (DE)
(72) Erfinder: Miebach, Henrik, 51465 Bergisch Gladbach (DE)
(74) Vertreter: Glawe, Delfs, Moll

(56) Entgegenhaltungen:
- EP-A1- 3 064 648
- EP-A1- 3 260 604
- EP-A2- 2 011 924

## Beschreibung

Die Erfindung betrifft eine Plattformanordnung für ein Offshore-Bauwerk gemäß Anspruch 1. Außerdem betrifft die Erfindung ein Offshore-Bauwerk gemäß Anspruch 14 Schließlich betrifft die Erfindung ein Verfahren zum Installieren einer Plattformanordnung an einem Offshore-Bauwerk gemäß Anspruch 15 Bei Offshore-Bauwerken handelt es sich um Konstruktionen, die abseits der Küste im offenen Meer aufgestellt werden. Ein Offshore-Bauwerk weist eine Unterkonstruktion auf, eine sogenannte Gründungsstruktur, die auf dem Meeresboden verankert ist. Der obere Teil des Offshore-Bauwerks, also typischerweise ein Teil der Gründungsstruktur, ragt in der Regel aus dem Wasser heraus. Darauf ist zumeist oberhalb der Wasseroberfläche die eigentliche technische Anlage montiert, also beispielsweise ein Turm einer Windenergieanlage, ein Umspannwerk, eine Anlagenplattform oder Ähnliches.

Zur Wartung sowohl der technischen als auch der strukturellen Komponenten eines Offshore-Bauwerks ist es erforderlich, technisches Personal auf das Offshore-Bauwerk zu bringen. Als Arbeitsfläche beziehungsweise zum Absetzen des Personals beispielsweise per Schiff oder Hubschrauber auf dem Bauwerk werden geeignete Plattformen am Offshore-Bauwerk vorgesehen. Eine solche Plattform ist in der Regel so angeordnet, dass sie sich selbst bei hohen Wasserständen oberhalb der Wasseroberfläche befindet. Die Befestigung der Plattform am Offshore-Bauwerk erfolgt typischerweise mittels einer Tragstruktur. Letztere weist im Allgemeinen vorzugsweise wenigstens ein, insbesondere aber zwei bevorzugt rohrförmige, besonders bevorzugt vertikale Tragelemente auf, beispielsweise eine vertikale rohrartige Stütze oder einen Stützpfeiler. Die Tragstruktur bildet zusammen mit der Plattform die sogenannte Plattformanordnung.

Die Tragstruktur der Plattformanordnung ist üblicherweise mit der Gründungsstruktur durch Verbindungselemente verbunden, zumeist verschweißt. Dabei können insbesondere wenigstens ein oberes und ein unteres Verbindungselement zur Herstellung der Verbindung vorgesehen sein. Ein oberes Verbindungselement dient dabei in der Regel zur Befestigung der Tragstruktur am Offshore-Bauwerk oberhalb der Wasserlinie. Währenddessen dient ein unteres Verbindungselement üblicherweise zur Befestigung unterhalb der Wasseroberfläche. Als Wasseroberfläche wird dabei der mittlere Wasserstand zugrunde gelegt.

Weiterhin können insbesondere an vertikalen Stützen im Bereich der Wasseroberfläche elastische Dämpfungselemente, sogenannte Bumper, als Rammschutz zum Anlegen von Schiffen vorgesehen sein. Die Plattformanordnung kann insbesondere einen Zugang aufweisen, beispielsweise als Schiffslandeplatz. Zu Wartungszwecken, zur Überwindung von Höhenunterschieden am Offshore-Bauwerk, beispielsweise zwischen Plattform und Schiffsdeck, insbesondere bei wechselnden Wasserständen, kann eine Steighilfe für Personen, wie beispielsweise eine Leiter, vorgesehen sein. Um die Plattform auch bei niedrigem Wasserstand als dem normalen oder mittleren Wasserstand, erreichen zu können, reicht die Leiter in der Regel von unterhalb der Meeresoberfläche bei mittlerem Wasserstand bis hinauf zur Plattform.

Aus dem Dokument EP 3 064 648 A1 ist ein Bootsanleger für eine Offshore-Anlage bekannt. Dabei umfasst der Bootsanleger mehrere Anlegermodule und Anlegereinrichtungen.

In dem Dokument EP 2 011 924 A2 ist eine Offshore-Plattform mit einem als Betonkonstruktion ausgeführten Übergangsstück beschrieben, deren Standfestigkeit bei vermindertem Wartungsaufwand gewährleistet wird.

Nachteilig an den bekannten Plattformanordnungen ist, dass diese aufgrund dauerhaft befestigter oder kompliziert zu lösender Verbindungselemente nur mit hohem Aufwand austauschbar sind. Eine Reparatur oder ein Austausch beispielsweise bei einem Defekt eines Teils der Plattformanordnung ist damit kostenintensiv, vor allem auch durch Verschmutzung im Wasser. Insbesondere müssen dauerhafte oder geschraubte Verbindungen manuell gelöst und später wieder verbunden werden, insbesondere unter Wasser durch Taucher.

Die Aufgabe der vorliegenden Erfindung besteht daher darin, eine Plattformanordnung für ein Offshore-Bauwerk bereitzustellen, deren Handhabung und Wartung vereinfacht ist.

Eine Plattformanordnung mit den Merkmalen des Anspruchs 1 löst diese Aufgabe, wobei wenigstens eines der Verbindungselemente als Teil einer Steckverbindung zur Verbindung mit einem korrespondierenden Gegenstück am Offshore-Bauwerk ausgebildet ist. Dies bedeutet insbesondere, dass am Offshore-Bauwerk ein Gegenstück zum Verbindungselement an der Plattformanordnung vorgesehen ist, so dass die beiden Verbindungselemente als Teile einer Steckverbindung zusammenpassen. Damit ist insbesondere ohne weitere Verbindungsmittel eine stabile Verbindung mit dem Offshore-Bauwerk herstellbar. Die Verbindung ist wartungsarm und vorzugsweise ohne personellen Einsatz schließbar. Insbesondere entfallen Tauchereinsätze und der damit verbundene Aufwand.

Ein weiterer Nachteil des Standes der Technik besteht darin, dass technisches Personal zum Hinaufsteigen auf die Plattform mittels der Steighilfen oder Leitern große Höhenunterschiede ohne Sicherung gegen Abstürzen überwinden müssen.

Eine weitere Aufgabe besteht daher darin, eine Plattformanordnung zu schaffen, die die Sicherheit für das Personal verbessert, insbesondere beim Benutzen der Steighilfe beziehungsweise Leiter, insbesondere um Höhenunterscheide zu überwinden, und/oder zur Plattform zu gelangen.

Eine nicht beanspruchte Plattformanordnung löst diese Aufgabe: diese Plattformanordnung weist demnach mehrere Leiterabschnitte auf, die zum Hinaufsteigen auf die Plattform vorgesehen sind. Vorzugsweise überdeckt dabei jeder Leiterabschnitt nur einen Teil des Höhenunterschieds zwischen Meeresspiegel beziehungsweise Schiffsdeck und der Plattform, anstatt des gesamten Abstandes. Alternativ oder zusätzlich können mehrere Leitern beziehungsweise Leiterabschnitte nebeneinander angeordnet sein. Somit wird die ungesicherte Steighöhe von der Gesamthöhe auf jeweils nur einen der Leiterabschnitte reduziert. Demnach muss nicht mehr die gesamte Distanz in einem Stück überwunden werden, sondern nur die Höhe eines Leiterabschnitts. Das Sicherheitsrisiko für das Personal durch ungesicherte Abstürze wird damit deutlich reduziert.

Im Folgenden werden besonders bevorzugte Weiterbildungen der Erfindung beschrieben. Die vorstehend wie auch die nachstehend genannten Lösungen der beiden oben genannten Aufgaben sind dabei beliebig miteinander kombinierbar. Insbesondere kann die Plattformanordnung gemäß Anspruch 1 zusätzlich eine Leiter aufweisen, vorzugsweise mit mehreren Leiterabschnitten.

In einer bevorzugten Ausführung der Erfindung sind mehrere, vorzugsweise wenigstens zwei Lagerstellen zur Verbindung der Plattformanordnung mit dem Offshore-Bauwerk vorgesehen. Die wenigstens eine Lagerstelle weist bevorzugt wenigstens ein Verbindungselement auf. Besonders bevorzugt sind drei Lagerstellen der Tragstruktur vorgesehen, insbesondere als obere, mittlere und untere Lagerstelle. Die mittlere Lagerstelle ist dabei bevorzugt zwischen der oberen und unteren Lagerstelle angeordnet, bevorzugt in einem mittleren Bereich. Vorzugsweise sind dementsprechend obere, mittlere und untere Verbindungselemente vorgesehen, insbesondere jeweils an der oberen, mittleren beziehungsweise unteren Lagerstelle. Die mittleren Verbindungselemente sind insbesondere zwischen den oberen und unteren Verbindungselementen angeordnet. Je Lagerstelle können ein oder mehrere, vorzugsweise zwei Verbindungselemente, vorgesehen sein.

Weiter bevorzugt ist wenigstens eine Zwischenplattform vorgesehen. Die Zwischenplattform ist insbesondere mit dem Offshore-Bauwerk verbindbar, vorzugsweise mittels Verbindungsmitteln, wie insbesondere wenigstens eines Flansches und/oder einer Steckverbindung. Bevorzugt ist die Zwischenplattform zwischen der am oberen Endbereich der Tragstruktur angeordneten Plattform und dem unteren Endbereich der Tragelemente oder Stützen angeordnet, vorzugsweise in einem zumindest im Wesentlichen mittleren Bereich.

Insbesondere sind an der Plattformanordnung mehrere Zwischenplattformen vorgesehen. Die Zwischenplattformen sind vorzugsweise auf unterschiedlicher Höhe über dem Meeresspiegel angeordnet. Weiter bevorzugt sind in etwa gleich große Abstände zwischen den Zwischenplattformen vorgesehen.

Die Zwischenplattformen sind vorzugsweise seitlich versetzt zueinander ausgerichtet. Dabei sind die Zwischenplattformen vorzugsweise abwechselnd linksseitig und rechtsseitig des Turms beziehungsweise einer zentralen Leiter angeordnet. Bevorzugt sind mehrere, insbesondere drei Leitern nebeneinander angeordnet. Die Zwischenplattformen sind dabei vorzugsweise schmaler als die obere Plattform. Bevorzugt überdecken die Zwischenplattformen in der Breite etwa zwei nebeneinander angeordnete Leitern.

Vorzugsweise ist das wenigstens eine Verbindungselement und/oder die wenigstens eine Steckverbindung in zumindest im Wesentlichen vertikaler Richtung verbindbar und/oder lösbar, insbesondere steckbar. Das Schließen erfolgt bevorzugt durch vertikales Aufsetzen der Plattformanordnung auf das Gegenstück am Offshore-Bauwerk. Damit ist es nicht erforderlich, ein separates Verbindungselement vorzusehen. Das Tragelement bildet bereits ein Verbindungselement aus. Besonderes bevorzugt ist die Steckverbindung selbsthaltend ausgebildet, insbesondere rastend, hakend und/oder klemmend.

Die Plattformanordnung zeichnet sich insbesondere dadurch aus, dass die unteren Endbereiche der insbesondere vertikalen Tragelemente, insbesondere Stützen, die Verbindungselemente aufweisen. Insbesondere sind die unteren Endbereiche der Tragelemente beziehungsweise Stützen selbst als untere Verbindungselemente ausgebildet. Dies bedeutet, dass die Tragstruktur bereits die Teile der Steckverbindung beinhaltet. Es ist daher insbesondere nicht erforderlich, zusätzliche Verbindungselemente an der Tragstruktur vorzusehen. Stattdessen werden vorhandene Tragelemente verwendet.

Weiter bevorzugt ist der untere Endbereich der Tragstruktur derart als Verbindungselement ausgebildet, dass eine insbesondere steckbare, nach unten offene Aufnahme für ein vorzugsweise konisches Gegenstück als Halteabschnitt aufweist, insbesondere einen Zapfen. Weiter bevorzugt sind die unteren Verbindungselemente mit einer Öffnung ausgestattet, insbesondere mit einer kreisförmigen Öffnung. Diese Öffnung dient dazu, ein korrespondierendes Gegenstück aufzunehmen. Der Querschnitt des Gegenstücks entspricht somit höchstens dem Querschnitt des unteren Verbindungselements. Vorzugsweise ist hinreichend Spiel vorgesehen, um ein Zusammensetzen zu ermöglichen. Bevorzugt dient der gesamte freie Querschnitt des jeweiligen rohrförmigen Tragelements als Teil der Steckverbindung.

Besonders bevorzugt weist die Plattformanordnung wenigstens eine Flanschverbindung zur Befestigung am Offshore-Bauwerk auf, vorzugsweise im Bereich des oberen Endbereichs der Tragstruktur beziehungsweise der oberen Lagerstelle. Die Verbindung kann zusätzlich mit einem Führungsdorn oder ähnlichem ausgestattet sein, um eine passgenaue Verbindung vorzusehen. Im Übrigen wird der Flansch mittels üblicher Befestigungselemente, wie beispielsweise Schrauben, verbunden. Demnach handelt es sich vorzugsweise um eine verschraubbare Flanschverbindung. Diese hat den Vorteil, dass eine sichere und stabile Verbindung oberhalb der Wasseroberfläche ausgeführt werden kann. Die auftretenden Kräfte, insbesondere in vertikaler, aber auch in horizontaler Richtung können damit von der Flanschverbindung aufgenommen werden.

Weiter bevorzugt sind die Leiterabschnitte parallel und/oder übereinander angeordnet. Insbesondere sind die Leiterabschnitte als separate Elemente ausgebildet. Dies bedeutet insbesondere, dass ein Wechsel von einem Leiterabschnitt zu einem anderen Leiterabschnitt ein Umsteigen erfordert. Hierzu kann eine Umstiegsmöglichkeit zum Wechsel von einem Leiterabschnitt zum nächsten vorgesehen sein, beispielsweise in Form wenigstens einer Zwischenplattform oder Ähnlichem. Dadurch wird die Sicherheit des technischen Personals gegen Herunterstürzen erhöht.

Vorzugsweise enden zwei Leiterabschnitte jeweils an einer gemeinsamen Zwischenplattform. Insbesondere sind die Leiterabschnitte nebeneinander angeordnet. Schließlich verlaufen die Leiterabschnitte vorzugsweise in unterschiedlichen Richtungen. Besonders bevorzugt zeigen die Leiterabschnitte zumindest im Wesentlichen in entgegengesetzte Richtungen beziehungsweise diametral voneinander weg. Die Leiterabschnitte verlaufen vorzugsweise in zumindest im Wesentlichen entgegengesetzten Richtungen, insbesondere parallel zueinander.

Insbesondere ist zwischen zwei Zwischenplattformen wenigstens ein Leiterabschnitt angeordnet. Weiter bevorzugt sind jeweils zwei Zwischenplattformen durch einen Leiterabschnitt verbunden. Es kann auch wenigstens eine Leiter mehrere übereinander und/oder seitlich versetzt angeordnete Zwischenplattformen miteinander verbinden. Somit kann eine Person über die Leiterabschnitte gefahrfrei zwischen den Zwischenplattformen wechseln. Zwei übereinander angeordnete Zwischenplattformen sind vorzugsweise mit einem Abstand von etwa einer Geschosshöhe angeordnet. Insbesondere liegt der Abstand bei weniger als 5 Metern, vorzugsweise bei etwa 2 bis 3 Metern, besonders bevorzugt bei etwa 2,10 Meter. Zwischen zwei übereinander angeordneten Zwischenplattformen ist jeweils seitlich versetzt eine Zwischenplattform angeordnet, insbesondere auf etwa halber Höhe zwischen zwei vorzugsweise deckungsgleich übereinander angeordneten Zwischenplattformen.

Weiter bevorzugt ist wenigstens ein Fangkorb zur Absicherung von die Leiter benutzenden Personen vorgesehen. Der Fangkorb ist zumindest einen Leiterabschnitt und/oder eine Plattform beziehungsweise Zwischenplattform zumindest im Wesentlichen umgebend ausgebildet. Bevorzugt ist der Fangkorb auf der dem Offshore-Bauwerk zugewandten Seite angeordnet. Damit ist sichergestellt, dass die Person ist auf der dem Offshore-Bauwerk zugewandten Seite durch den Fangkorb gegen Herunterfallen abgesichert ist. Der Fangkorb ist dabei insbesondere zwischen zwei Plattformen, also insbesondere einer Zwischenplattform und einer weiteren Plattform, und/oder auch vorzugsweise zwischen zwei Zwischenplattformen angeordnet. Damit wird die mögliche Fallhöhe einer Person auf den Abstand zweier Plattformen begrenzt.

Besonders bevorzugt weist die wenigstens eine Plattform eine Umzäunung auf. Diese Umzäunung und/oder der Boden der Plattform weist im Bereich eines Zugangs einen Durchbruch auf. Vorzugsweise ist wenigstens ein Durchbruch im Bereich des Bodens und/oder der Umzäunung vorgesehen. Der Durchbruch dient dazu, auf den Boden der jeweiligen Plattform beziehungsweise Zwischenplattform zu gelangen.

Die Eingangs bezüglich Anspruch 1 genannte Aufgabe wird außerdem gelöst durch ein Offshore-Bauwerk gemäß dem Oberbegriff des Anspruchs 14 . Demnach ist die Plattformanordnung mittels einer lösbaren Steckverbindung mit der Gründungstruktur des Offshore-Bauwerks verbindbar und/oder verbunden. Besonders bevorzugt weist das Offshore-Bauwerk wenigstens ein Verbindungselement als Teil einer Steckverbindung zur Befestigung einer Plattformanordnung insbesondere gemäß den obigen Beschreibungen auf. Das Offshore-Bauwerk weist dementsprechend Verbindungselemente auf, die mit den korrespondierenden Verbindungselementen der Plattformanordnung eine Steckverbindung ausbilden können. Die Plattformanordnung beinhaltet danach ein korrespondierendes Gegenstück zu demjenigen des Offshore-Bauwerks als Teil der Steckverbindung. Vorzugsweise ist die Steckverbindung in vertikaler Richtung steckbar. Demnach sichert die Steckverbindung die Plattformanordnung vorzugsweise zumindest gegenüber seitlichen Bewegungen und Kräften. Es handelt sich bevorzugt um eine lösbar verbindbare Steckverbindung. Damit kann die Tragstruktur der Plattformanordnung, beispielsweise im Falle eines Defekts der Plattformanordnung, auch nach dem Schließen der Steckverbindung jederzeit wieder entfernt die Steckverbindung gelöst wird.

Besonders bevorzugt ist am Offshore-Bauwerk ein Verbindungselement in Form eines konischen Halteabschnitts, insbesondere Zapfens, ausgebildet. Mit diesem konischen Zapfen korrespondiert ein Halteelement beziehungsweise Verbindungselement der Plattformanordnung, insbesondere der Tragstruktur, mit im Wesentlichen zylindrischem Innenquerschnitt. Es handelt sich vorzugsweise um einen Endbereich eines rohrförmigen Tragelements, insbesondere einer Stütze. Die Plattformanordnung ist mit am unteren Endbereich der Tragstruktur angeordneten Steckverbindungen oder Tragelementen ausgestattet. Diese können direkt als Endbereich der rohrförmigen Tragelemente ausgebildet sein. Vorzugsweise befinden sich die Steckverbindung oder die Zapfen zumindest bei durchschnittlichen Wasserstand zumindest im Wesentlichen unter der Wasseroberfläche. Die Steckverbindung kann insbesondere durch einfaches Aufsetzen in senkrechter Richtung geschlossen werden, um so die Plattformanordnung am Offshore-Bauwerk zu montieren. Ein Einsatz von Tauchern ist damit in der Regel nicht erforderlich. Die insbesondere manuell zu verschraubenden Flansche sind erfindungsgemäß zumindest bei mittlerem Wasserstand vorzugsweise ausschließlich oberhalb der Wasseroberfläche angeordnet.

Die Eingangs genannte Aufgabe betrifft ebenfalls ein Verfahren zur Installation beziehungsweise Deinstallation eines Offshore-Bauwerks. Die Aufgabe einer Vereinfachung des Aufbaus des Offshore-Bauwerks wird gelöst durch ein Verfahren gemäß Anspruch 15

. Das Verfahren wird insbesondere im Zusammenhang mit einer Plattformanordnung und/oder einem Offshore-Bauwerk jeweils gemäß obigen Ausführungen durchgeführt. Das Verfahren zeichnet sich dabei dadurch aus, dass die Tragstruktur des Offshore-Bauwerks mittels einer zumindest bei mittlerem Wasserstand unter Wasser angeordneten Steckverbindung befestigt wird.

Die Plattformanordnung wird bevorzugt mit einem unteren Endbereich der Tragstruktur, insbesondere mit rohrförmigen Tragelementen wie insbesondere Stützen, auf am Offshore-Bauwerk angeordnete, insbesondere konische Steckverbinder, insbesondere Zapfen, aufgesetzt. Dabei werden die Steckverbinder oder Zapfen vorzugsweise zumindest bei durchschnittlichem Wasserstand im Wesentlichen unter der Wasseroberfläche angeordnet.

Besonders bevorzugt wird die Plattformanordnung mit einem oberen Endbereich, vorzugsweise oberhalb der Wasseroberfläche bei durchschnittlichem Wasserstand an Verbindungselemente, insbesondere verschraubte Flansche, zum Verbinden angelegt.

Im Folgenden wird anhand bevorzugter Ausführungsbeispiele und anhand prinzipienhafter Zeichnungen die Erfindung näher erläutert. In den Zeichnungen zeigen:
- Fig. 1:: eine Frontalansicht einer erfindungsgemäßen Plattformanordnung,
- Fig. 2:: eine Seitenansicht der Plattformanordnung gemäß Fig. 1,
- Fig. 3:: ein Satz Verbindungselemente am Offshore-Bauwerk als untere Lagerstelle für die Plattformanordnung,
- Fig. 4:: die Darstellung der Fig. 3 mit einer aufgesetzten Plattformanordnung,

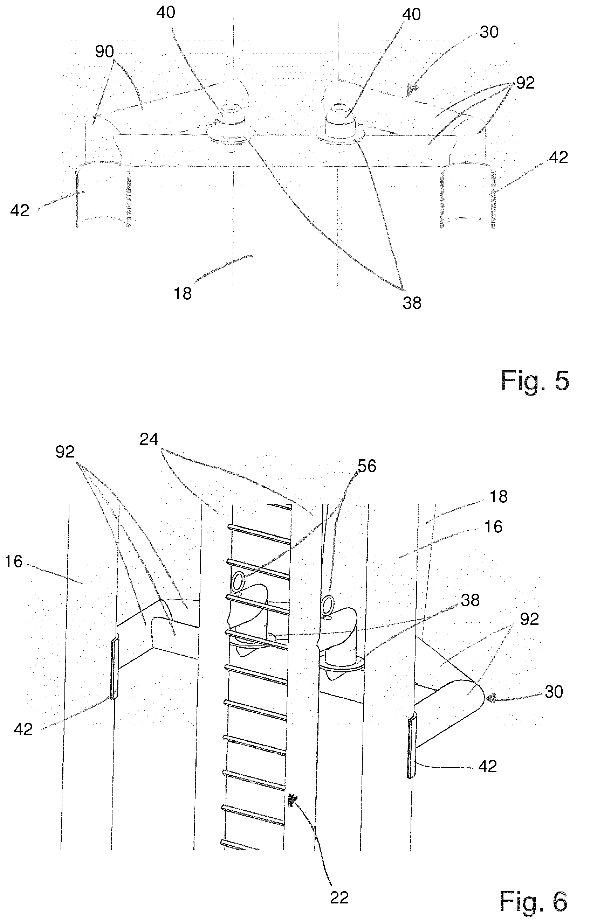

- Fig. 5:: eine mittlere Lagestelle eines Offshore-Bauwerks für eine Plattformanordnung,
- Fig. 6:: die mittlere Lagerstelle der Fig. 5 mit aufgesetzter Plattformanordnung,

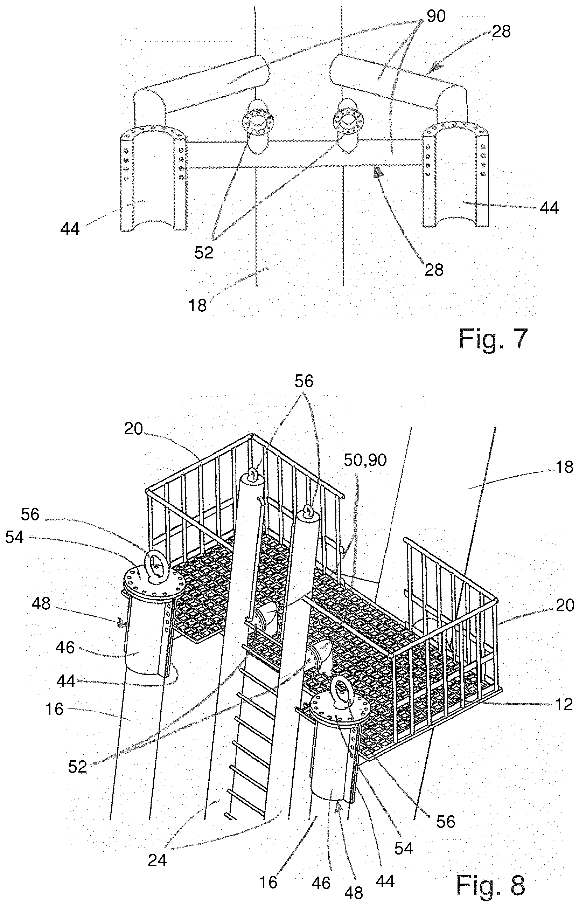

- Fig. 7:: eine obere Lagerstelle eines Offshore-Bauwerks für eine Plattformanordnung,
- Fig. 8:: die obere Lagerstelle der Fig. 7 mit aufgesetzter Plattformanordnung,
- Fig. 9:: eine Frontalansicht einer Plattformanordnung an einem Offshore-Bauwerk mit mehreren Leiterabschnitten,
- Fig. 10:: die Darstellung der Fig. 9 in einer Seitenansicht,
- Fig. 11:: eine perspektivische Ansicht einer Plattformanordnung mit mehreren Leiterabschnitten,
- Fig. 12:: eine Detailansicht ähnlich der Fig. 11 mit einer Zwischenplattform,
- Fig. 13:: eine perspektivische Ansicht einer oberen Plattform der Plattformanordnung mit einer angelegten Umstiegsbrücke,
- Fig. 14:: eine weitere Darstellung der oberen Plattform gemäß Fig. 13 mit einer Umstiegsbrücke in anderer Position,

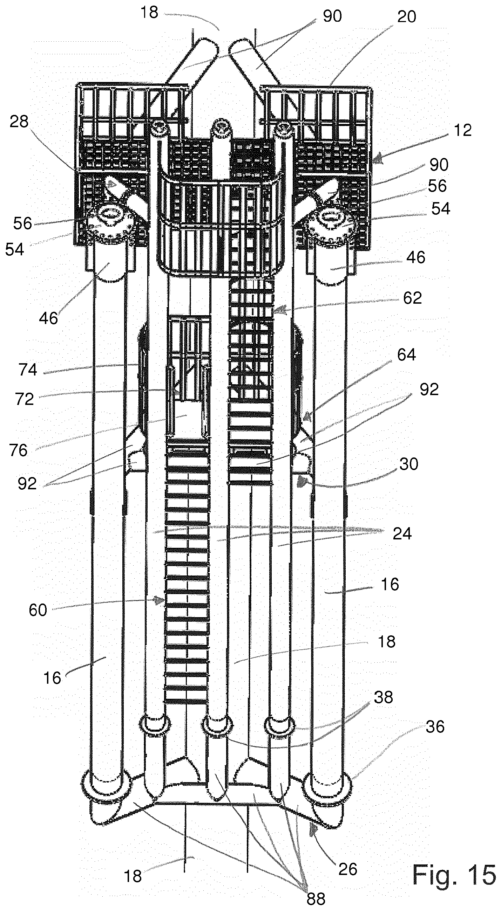

- Fig. 15:: eine perspektivische Ansicht einer Plattformanordnung an einem Offshore-Bauwerk mit Steckverbindungen und separaten Leiterabschnitten,
- Fig. 16:: eine Frontalansicht eines weiteren Ausführungsbeispiels der Erfindung mit mehreren Zwischenplattformen,
- Fig. 17:: eine Seitenansicht des Ausführungsbeispiels der Fig. 16,
- Fig. 18:: eine Rückansicht des Ausführungsbeispiels der Fig. 16,
- Fig. 19:: eine perspektivische Ansicht des Ausführungsbeispiels der Fig. 16,
- Fig. 20:: eine Draufsicht auf die obere Plattform des Ausführungsbeispiels der Fig. 16, und
- Fig. 21:: eine Detaildarstellung des Ausführungsbeispiels der Fig. 16.

Eine erfindungsgemäße Plattformanordnung 10 weist eine Plattform 12 und eine Tragstruktur 14 auf. Die Tragstruktur 14 wird durch mehrere rohrförmige Stützen, im vorliegenden Ausführungsbeispiel zwei Stützen 16 gebildet. Die Plattform 12 ist am oberen Endbereich der Tragstruktur 12 als im Wesentlichen horizontal verlaufende Ebene ausgebildet.

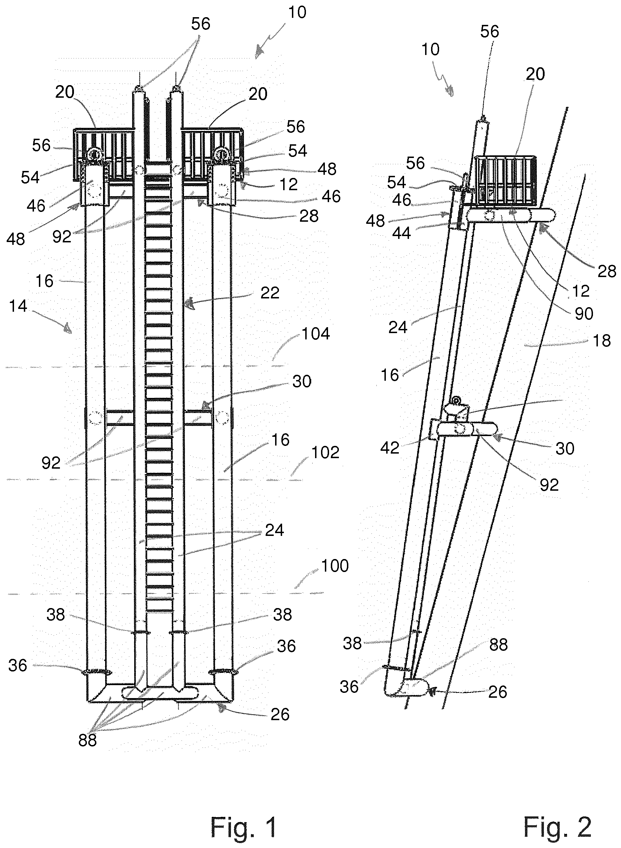

Die Plattformanordnung 10 ist mit der Tragstruktur 14 an einem hier nur ausschnittsweise gezeigten Offshore-Bauwerk befestigt. Beispielsweise Fig. 2 zeigt einen Abschnitt eines Stützpfeilers 18 einer Gründungsstruktur eines Offshore-Bauwerks. Dieser Stützpfeiler 18 verläuft aufgrund der sich von unten nach oben verjüngenden Gründungsstruktur, beispielsweise in Form einer Jacketstruktur, schräg nach rechts oben in der Fig. 2.

Die Plattform 12 ist am oberen Endbereich der Tragstruktur 14, also am oberen Endbereich der Stützen 16 angeordnet. Aus Sicherheitsgründen, nämlich zum Schutz gegen Herunterfallen, weist die Plattform 12 im vorliegenden Fall eine Umzäunung 20 auf.

Typischerweise verläuft die Wasseroberfläche bei normalen Wasserstand bei einer installierten Plattformanordnung 10 auf hoher See im Bereich der unteren Hälfte der Stützen 16. Exemplarisch sind in Fig. 1 verschiedene typische Wasserstände einge-zeichnet, nämlich ein niedriger Wasserstand 100, ein mittlerer Wasserstand 102 und ein hoher Wasserstand 104. Höhere und tiefere wie auch dazwischen liegende Wasserstände sind selbstverständlich ebenfalls denkbar. Die hier gezeigten drei Stände dienen lediglich als Referenz und können auf die anderen Figuren entsprechend übertragen werden.

Um es einer Person zu ermöglichen, von einem Schiff auf Höhe der Wasseroberfläche eines der Wasserstände 100, 102, 104 oben auf die Plattform 12 zu gelangen, ist hier eine Leiter 22 vorgesehen. Dazu sind weitere im Vergleich zu den Stützen 16 mit kleineren Querschnitt ausgebildeten Stützen 24 vorgesehen.

Zwischen den beiden Stützen 24 sind horizontal verlaufende Sprossen vorgesehen. Die Stützen 24 verlaufen wie die Stützen 16 senkrecht oder nahezu senkrecht nach oben. Wie der Fig. 2 zu entnehmen ist, ist eine leichte Schrägstellung gegenüber der Senkrechten vorgesehen, entsprechend der Neigung der Stützpfeiler 18. Dies erleichtert im Übrigen den Aufstieg einer Person auf der Leiter 22. Zum anderen ist dies aber auch durch die stärkere Schrägstellung der Stützpfeiler 18 des Offshore-Bauwerks vorgegeben.

Im unteren Bereich der Plattformanordnung 10 ist eine untere Lagerstelle 26 angeordnet. Diese Lagerstelle 26 dient zur Befestigung der Plattformanordnung 10 an dem Offshore-Bauwerk. Am oberen Endbereich der Plattformanordnung 10 ist eine weitere Lagerstelle als obere Lagerstelle 28 ausgebildet. Damit ist die Plattformanordnung 10 an zunächst zwei Punkten mit dem Offshore-Bauwerk verbunden.

Um die Plattformanordnung 10 zusätzlich zu stabilisieren, kann, wie hier gezeigt ist, eine weitere Abstützung in Form einer mittleren Lagerstelle 30 vorgesehen sein. Diese befindet sich dementsprechend in etwa in der Mitte zwischen der unteren Lagerstelle 26 und der oberen Lagerstelle 28.

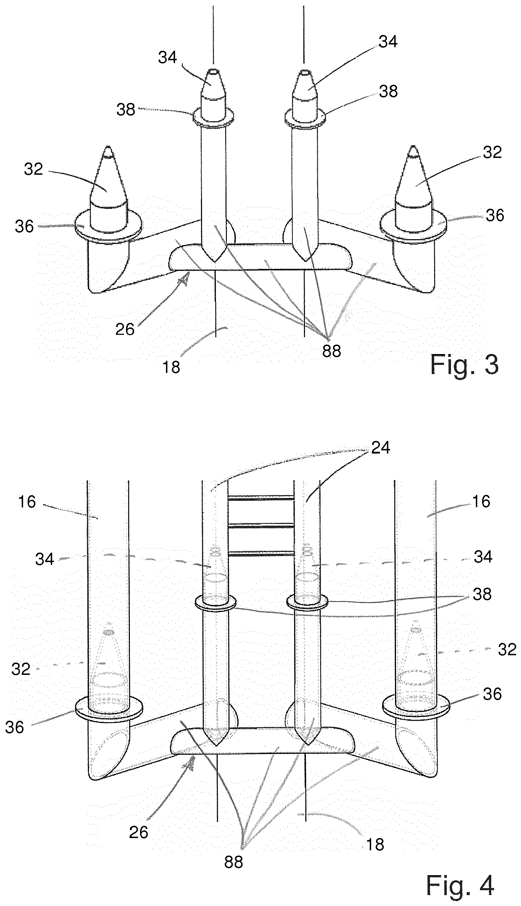

Wie beispielsweise den Fig. 3 und 4 zu entnehmen ist, weist die untere Lagerstelle 26 eine Reihe Verbindungselemente in Form von Zapfen 32 und 34 auf. Die Zapfen 32 und 34 weisen eine sich nach oben verjüngende, also konische Form auf. Im vorliegenden Fall handelt es sich um Zapfen 32 und 34 mit kreisförmigen Querschnitt. Aufgrund der nach oben spitz zulaufenden Form handelt es sich demnach um konische Zapfen 32 und 34.

Die Stützen 16 und 24 der Plattformanordnung 10 sind hier rohrförmig ausgebildet. Sie haben einen kreisrunden Querschnitt. Die unteren Endbereiche der Stützen 16 und 24 weisen Öffnungen auf, die dem inneren Querschnitt der jeweiligen Stützen 16 und 24 entsprechen. Demnach können die Stützen 16 beziehungsweise 24 auf die entsprechenden Zapfen 32 beziehungsweise 34 aufgesteckt werden. Dies ist beispielsweise in Fig. 4 im vollständig montierten Zustand zu sehen. Aufgrund des geringfügig kleineren Außenquerschnitts der Zapfen 32 und 34 gegenüber dem Innenquerschnitt der Stützen 16 beziehungsweise 24 kann die Plattformanordnung 10 beidseitig gegenüber der zentralen Achse 32 und 34 von dem Offshore-Bauwerk weg oder zu diesem hin verkippt werden, um die Montage zu erleichtern.

Sobald die Plattformanordnung 10 vollständig auf dem Offshore-Bauwerk abgestellt ist, stehen die Stützen 16 und 24 auf Stoppelementen 36 beziehungsweise 38 auf. Diese sind im vorliegenden Fall als im Wesentlichen horizontal angebrachte Kreisscheiben unterhalb der konischen Bereiche der Zapfen 32 und 34 angebracht. Die Stützen 16 beziehungsweise 24 mit ihren kreisförmigen Querschnitten stehen mit dem unteren Randbereichen auf diesen Stoppelementen 36 und 38 auf.

Zur Installation der Plattformanordnung 10 wird diese beispielsweise mittels eines Krans von oben herab abgesenkt. Die Zapfen 32 dienen dabei aufgrund der längeren Ausbildung des konischen Bereichs als Führungszapfen. Dies bedeutet, dass diese beim Absenken der Plattformanordnung 10 von oben in Richtung der Lagerstelle 26 als erstes in die korrespondierenden Endbereiche der Stützen 16 eintreten. Die Zapfen 34 sind kürzer ausgebildet und treten daher erst bei weiterem Absenken der Plattformanordnung 10 in die korrespondierenden Stützen 24 ein. Dementsprechend wird durch die Zapfen 32 eine Vorpositionierung und Führung der Plattformanordnung 10 bei der Installation vorgenommen.

Im Bereich der mittleren Lagerstelle 32 sind ebenfalls Zapfen 40 angeordnet. Diese dienen im vorliegenden Fall jedoch nur zur Anlenkung der zentralen, kleineren Stützen 24 für die Leiter 22. Die Zapfen 40 sind mit einer vergleichsweise kurzen Längserstreckung ausgestattet, um die Montage der Plattforman-ordnung 10 nicht zu behindern, aber dennoch im vollständig montierten Zustand eine stabile Halterung zu gewährleisten. Die Stützen 16 werden in diesem Bereich durch U-förmige Stützelemente 42 gelagert. Die Stützelemente sind Teil der Lagerstelle 30. An diese Stützelemente 42 werden die leicht schräg verlaufenden Stützen 16 angelehnt.

Im Bereich der oberen Lagerstelle 28 sind keine Steckverbindungen vorgesehen wie bei den Lagerstellen 26 und 30. Stattdessen sind hier Flanschverbindungen zur sicheren Lagerung und Fixierung der Plattformanordnung 10 vorgesehen. An dem Offshore-Bauwerk sind dazu halbrohrförmige Flanschschellen 44 angeordnet, die mittels korrespondierender loser Flanschschellen 46 zu einem rohrförmigen Flanschverbinder 48 geschlossen werden können. Zur Verbindung der beiden Flanschschellen 44 und 46 dienen insbesondere Schrauben oder ähnliche, lösbare Befestigungsmittel. Diese Flanschverbinder 48 dienen zur Aufnahme der Stützen 16 der Plattformanordnung 10. Der Flanschverbinder 48 umgreift die Stütze 16. Mittels Schrauben oder ähnlichen Befestigungsmitteln werden die Komponenten der Flanschverbinder 48 miteinander verschraubt, um die Stütze 16 sicher zu umgreifen.

Zur Befestigung der Stützen 24 sind weitere Flanschverbinder vorgesehen. Hierbei handelt es sich im dargestellten Ausführungsbeispiel um sogenannte Rohrflansche 59 an der Lagerstelle 28. An diese kann ein korrespondierender Rohrflansch 52 der Stützen 24 angeschraubt werden.

Die Stützen 16 weisen am oberen Endbereich deckelförmige Abschlusselemente 54 auf, die primär als Wetterschutz dienen. Des Weiteren sind an diesen Abschlusselementen 54 Tragösen 56 angebracht, die zum Anhängen der Plattformanordnung 10, beispielsweise an einen hier nicht dargestellten Kran, dienen können. Tragösen 56 können beispielsweise auch an den Stützen 24 vorgesehen sein.

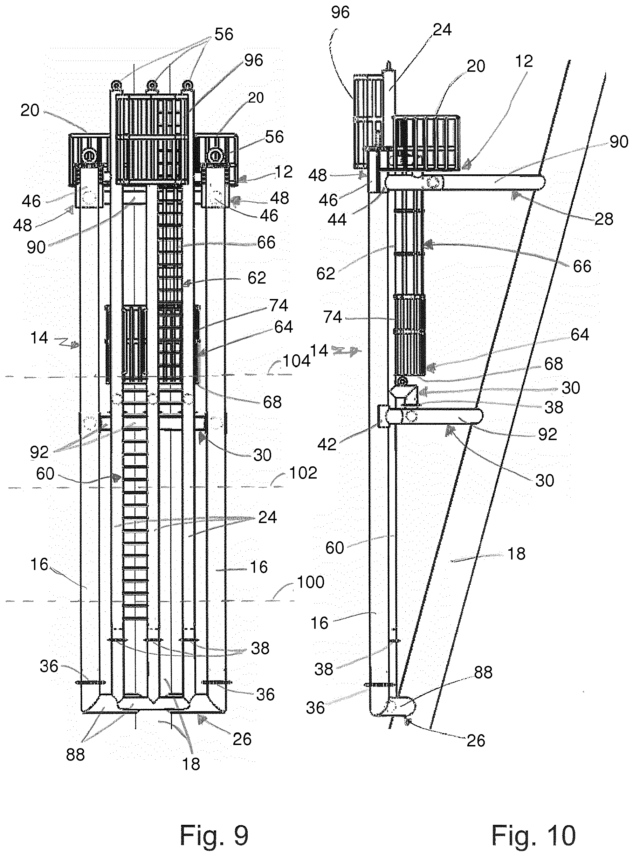

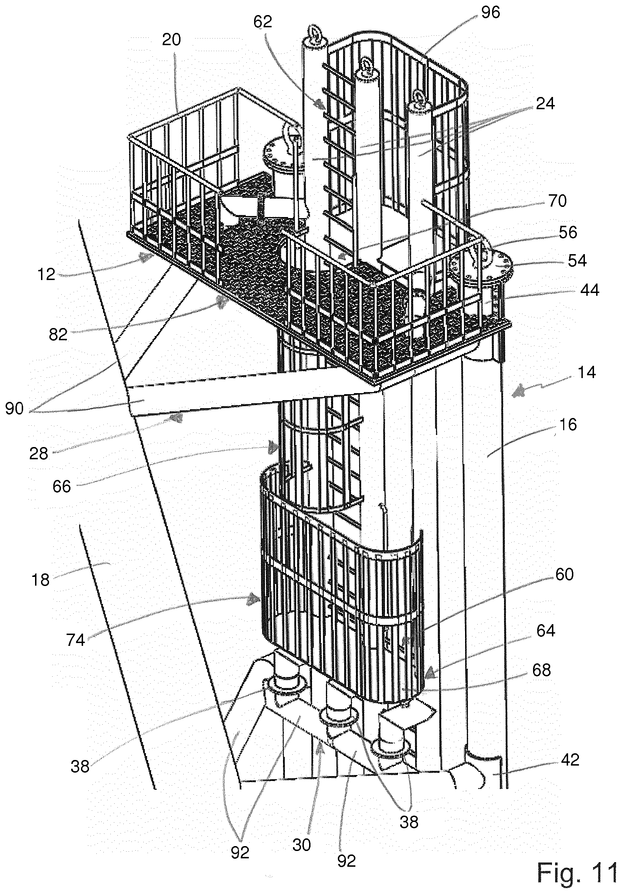

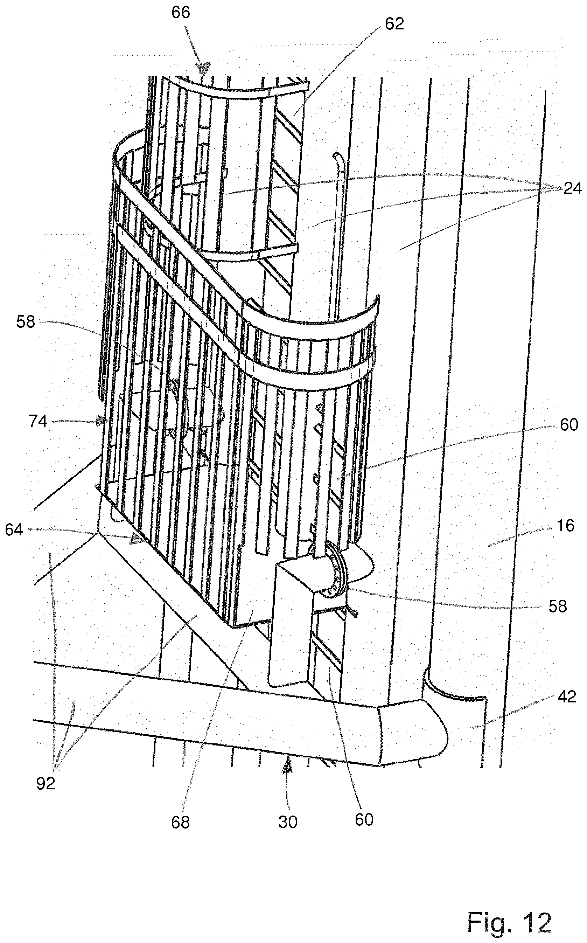

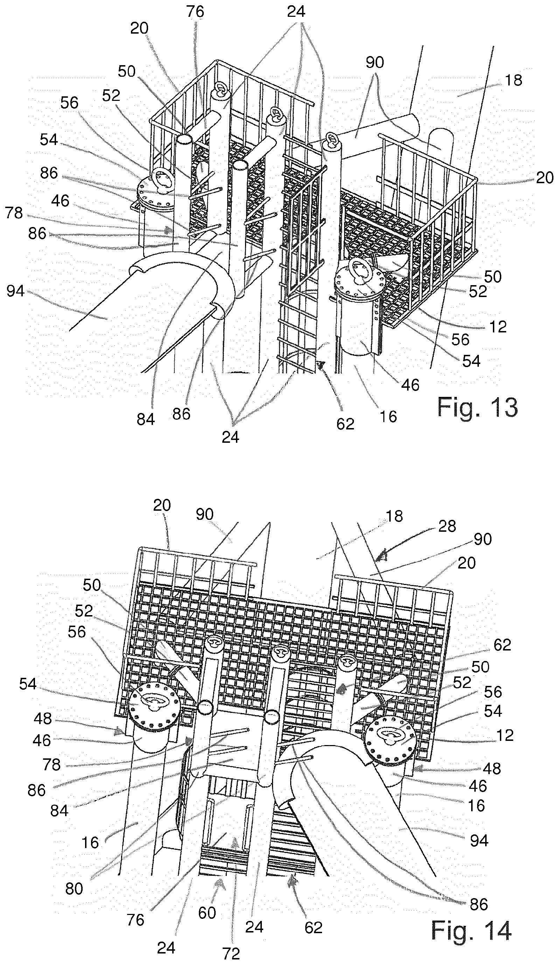

Ein weiteres Ausführungsbeispiel der Erfindung betrifft insbesondere den Zugang zur Plattform 12 für eine nicht gezeigte Person. Die Fig. 9 bis 14 beziehen sich insbesondere auf dieses Ausführungsbeispiel.

Statt einer einzelnen Leiter 22 sind im vorliegenden Fall mehrere Leiterabschnitte 60, 62 vorgesehen. Wie insbesondere in der Fig. 9 zu sehen ist, sind die beiden Leiterabschnitte 60 und 62 abschnittsweise parallel nebeneinander beziehungsweise übereinander angeordnet.

Bei diesem Ausführungsbeispiel ist im mittleren Bereich der Plattformanordnung 10 eine sogenannte Zwischenplattform 64 angeordnet. Der in der Fig. 9 auf der linken Seite dargestellte Leiterabschnitt 60 verläuft dabei von dieser Zwischenplattform 64 ausgehend nach unten. Typischerweise befindet sich dabei etwas die untere Hälfte des Leiterabschnittes 60 zumindest bei mittlerem Wasserstand 102 unterhalb der Wasseroberfläche, also im Wasser. Der rechts dargestellte Leiterabschnitt 62 verläuft von der Zwischenplattform nach oben in Richtung der oberen Plattform 12. Dementsprechend dient dieser Leiterabschnitt 62 primär dazu, dass eine Person zwischen den beiden Plattformen 12 und 64 hin und her klettern kann.

Bei hohen Wasserstand 104, also oberhalb der Zwischenplattform 64 oder im Bereich derselben, kann eine Person direkt von einem Schiff über den Leiterabschnitt 62 auf der Außenseite zur Plattform 12 hinaufklettern. Hierzu weist die Plattform 12 auf der Außenseite einen Fangkorb 66 und im Boden 68 der Plattform 12 einen Durchbruch 70 auf. Durch den Durchbruch 70 kann die Person vom Leiterabschnitt 62 auf die Plattform 12 gelangen.

Bei niedrigen Wasserstand 100, also insbesondere einem Stand unterhalb der Zwischenplattform 64, dient in der Regel der Leiterabschnitt 60 dazu, dass eine Person von einem Schiff zunächst zur Zwischenplattform 64 aufsteigen kann. Im Bereich der Zwischenplattform 64 kann die Person nunmehr auf den anderen Leiterabschnitt 62 wechseln. Von dort kann sie über den Leiterabschnitt 62 zur oberen Plattform 12 gelangen. Hierzu sollte der untere Leiterabschnitt 60 auch bei üblichem niedrigem Wasserstand 100 unterhalb desselben enden. Bei besonders hohen Wasserständen 104 kann die Person direkt vom Boot auf den oberen Leiterabschnitt 62 aufsteigen.

Aus Sicherheitsgründen weist der komplette Leiterabschnitt 62 auf der dem Offshore-Bauwerk zugewandten Seite einen vollständigen Fangkorb 66 zwischen der Zwischenplattform 64 und der Plattform 12 auf. Die Person kann nun durch einen seitlichen Durchbruch 72 einer Umzäunung 74 der Zwischenplattform 64 auf den Boden 76 derselben gelangen. Von dort kann die Person auf der innenliegenden, also der dem Offshore-Bauwerk zugewandten Seite des Leiterabschnitts 62 innerhalb des Fangkorbs 66 gefahrlos nach oben in Richtung der Plattform 12 hinaufklettern. Damit wird die ungesicherte Steighöhe beispielsweise gegenüber einer durchgehenden Leiter 22 insgesamt deutlich reduziert.

Des Weiteren weist die Umzäunung 20 der Plattform 12 zusätzliche Sicherheitselemente auf. So ist an der Plattform 12 eine Anstoßvorrichtung 76 mit zwei vertikalen Streben 80 vorgesehen, an die beispielsweise eine schwenkbare Zugangsbrücke 94 eines Schiffes angelehnt werden kann. Zwischen den beiden vertikalen Streben 80 befindet sich eine kleine Zugangsplattform 84, über die eine Person auf die Plattform 12 gelangen kann. Die Zugangsplattform 84 kann eine zusätzliche Umzäunung 96 zum Schutz beim Einstieg aufweisen.

Um die Sicherheit zusätzlich zu erhöhen, ist wenigstens eine Schranke, hier eine Reihe einfacher Schranken 86, vorgesehen, die einen Zugang 82 gegen versehentliches Durchschreiten absichern. Die Schranken 86 sind verschwenkbar angebracht, um einen Zugang zu ermöglichen, ein unbeabsichtigtes Passieren aber zu verhindern. Der Zugang 92 zur Plattform 12 ist als Durchbruch in der Umzäunung 20 ausgebildet.

Die Zwischenplattform 64 hat neben der Umstiegsmöglichkeit zwischen den beiden Leiterabschnitten 60 und 62 noch einen weiteren Zweck. Sie dient der Wartung beziehungsweise dem Montieren beziehungsweise Demontieren der im Bereich der mittleren Lagerstelle 30 vorgesehenen Rohrflansche 58. Diese sind dort angeordnet, um die Stützen 24 der Leiter 22 beziehungsweise der Leiterabschnitte 60 und 62 wie auch die Zwischenplattform 64 selber sicher an dem Offshore-Bauwerk zu befestigen. Alternativ können hierfür ebenfalls konisch geformte Zapfen beziehungsweise allgemein eine Steckverbindung vorgesehen sein.

Sofern besonders große Unterschiede im Wasserstand 100, 102, 104 zu erwarten sind, können auch mehr als zwei Leiterabschnitte 60, 62 vorgesehen sein. In der Regel wird dann gegebenenfalls eine weitere Zwischenplattform vorgesehen sein. Für einen Wechsel durch Auf- und Absteigen zwischen zwei Plattformen kann dann jeweils wieder ein Fangkorb 66 zur Sicherung des jeweiligen Leiterabschnittes 60, 62 auf der dem Offshore-Bauwerk zugewandten Seite vorgesehen sein.

Die Zapfen 32, 34 und 40 beziehungsweise die Rohrflansche 58 sind mittels unterer Stützstreben 88, oberer Stützstreben 90 beziehungsweise mittlerer Stützstreben 92 im Bereich der jeweiligen Lagerstellen 26, 28 und 30 mit dem Offshore-Bauwerk verbunden. Die Verbindung erfolgt aus Stabilitäts- und Sicherheitsgründen in der Regel durch Verschweißen. Die aus den Stützstreben 88, 90, 92 und den Flanschverbindern 48, 50 beziehungsweise 58 und den Stützelementen 42 hergestellten Lagerstellen 26, 28, 30 sind daher dauerhaft mit dem Offshore-Bauwerk verbunden.

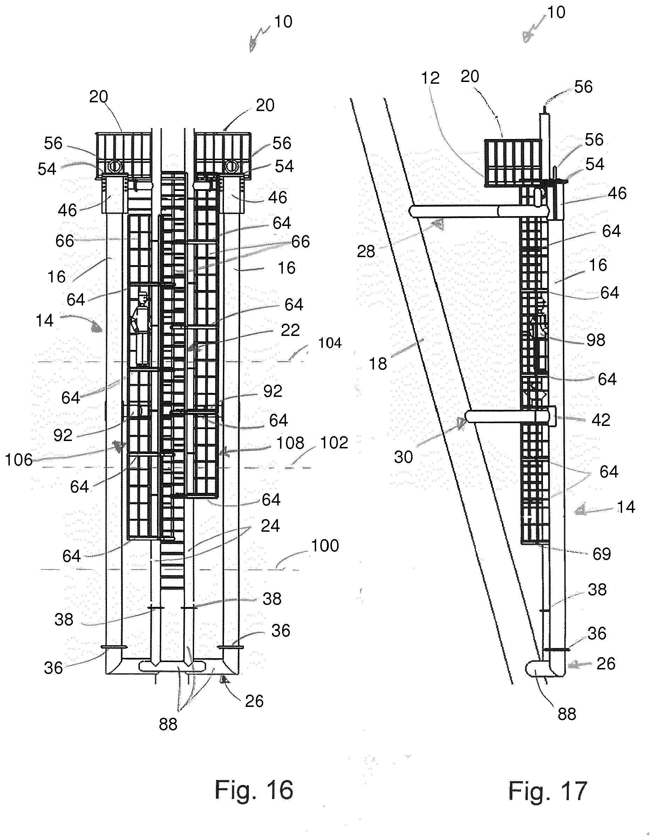

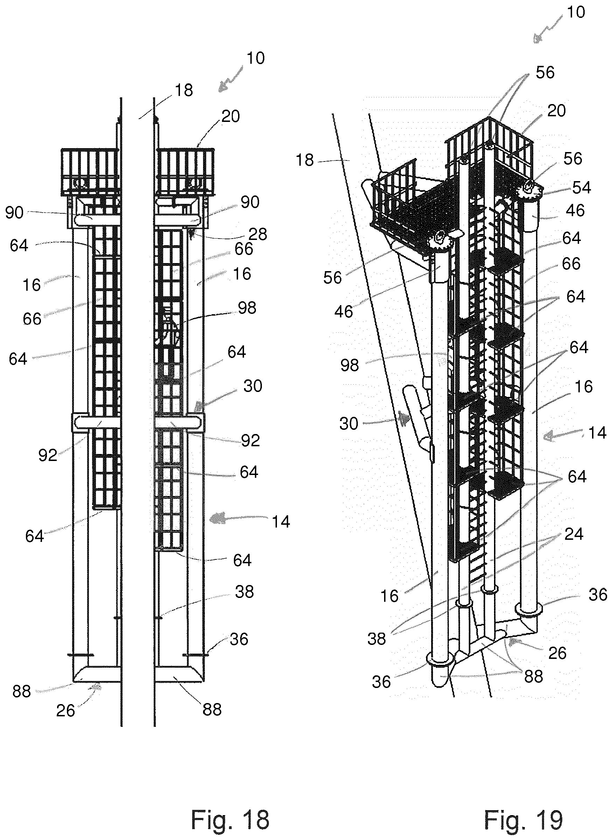

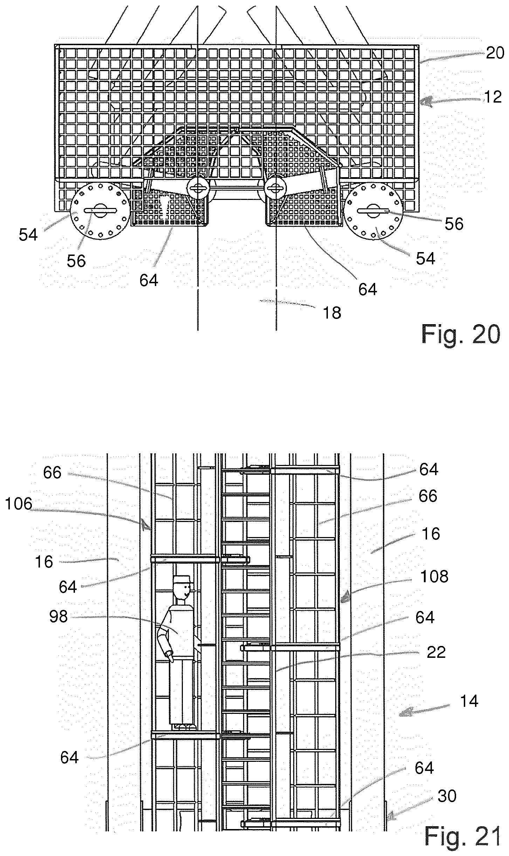

Ein weiteres bevorzugtes Ausführungsbeispiel wird anhand der Figuren 16 bis 21 näher beschrieben. Die wesentlichen Merkmale entsprechen den obigen Schilderungen der übrigen Ausführungsbeispiele.

Eine Besonderheit dieses Ausführungsbeispiels besteht jedoch darin, dass eine Vielzahl von Zwischenplattformen 64 vorgesehen ist. Diese sind außerdem teilweise übereinander und teilweise seitlich versetzt angeordnet. Im gezeigten Beispiel der Fig. 16 bis 21 sind die Zwischenplattformen 64 abwechselnd nach links und rechts versetzt angeordnet.

Dabei sind ergänzend zur mittleren Leiter 22 zwei zusätzliche Leitern 106 und 108 vorgesehen. Diese sind parallel links beziehungsweise rechts neben der zentralen Leiter 22 angeordnet.

Die hier bezugnehmend auf Fig. 16 als links gelegenen bezeichnete Leiter 106 verbindet dabei die linksseitig übereinander angeordneten Zwischenplattformen 64 miteinander. Entsprechend verbindet die als rechts gelegenen bezeichnete Leiter 108 verbindet die rechtsseitig übereinander angeordneten Zwischenplattformen 64 miteinander.

Die zentrale Leiter 22 weist dabei zwar seitliche Einstiegsmöglichkeiten auf die Zwischenplattformen 64 auf. Sie ist jedoch zum durchgehenden Auf- oder Abstieg vorgesehen. Daher ist sie nicht durch die Zwischenplattformen 64 unterbrochen beziehungsweise diese weisen entsprechende Durchbrüche oder freie Bereiche auf, um einer hier gezeigten Person 98 den ungehinderten Auf- oder Abstieg auf dieser Leiter 22 zu ermöglichen.

Die Abstände zwischen zwei übereinander angeordneten Zwischenplattformen 64 sind dabei gerade so gewählt, dass eine Person 98 bequem dazwischen aufrecht stehen kann. Der Abstand beträgt dabei zumindest etwas mehr als die übliche maximale Körpergröße von etwa 2 Metern, also beispielsweise 2,10 Meter. Dementsprechend beträgt der Abstand zur nächsten seitlich versetzten Zwischenplattform 64 etwa die Hälfte dieses Abstandes. Somit kann eine Person gegebenenfalls auch ohne Hilfe einer Leiter von einer Zwischenplattformen 64 auf die nächste gelangen. Vor allem wird aber die Verletzungsgefahr durch eventuelle Abstürze minimiert. Beim Auf- und Absteigen mittels der Leitern 106 und 108 wir damit ein in etwa zickzackförmiger Weg jeweils nach links und rechts beschritten.

Eine Fangkorb um die Rückseite der Zwischenplattformen 46 und die Leitern 106 und 108 herum schützt die Person 98 vor einem Herunterstürzen. Die Person 98 kann somit im Innern des Fangkorbs 66 beliebig mittels der Leitern 106 und 108 und der Zwischenplattformen 64 auf und absteigen.

Im Bereich der Wasseroberfläche 100, 102, 104 kann die Person 98 von einem Boot aus bequem die nächstgelegene Zwischenplattform 64 erreichen, da diese in vergleichsweise kleinen und regelmäßigen Abständen angeordnet sind. Das Zurücklegen längerer Strecken auf einer freien Leiter 22 ist damit nicht erforderlich.

Die Merkmale der verschiedenen Ausführungsbeispiele sind beliebig miteinander kombinierbar, sofern sie sich nicht technisch ausschließen. Lediglich der Übersicht halber sind die wichtigsten Merkmale hier in separaten Beispielen beschrieben.

Das erfindungsgemäße Verfahren zur Installation beziehungsweise Deinstallation der Plattformanordnung 10 an einem Offshore-Bauwerk wird im Folgenden nochmals erläutert:
Die Plattformanordnung 10 wird insbesondere an den Tragösen 56 mit einem nicht gezeigten Kran verbunden. Der Kran hebt die Plattformanordnung 10 an und bringt sie in Position kurz oberhalb der späteren Einsatzstelle. Die unteren Endbereiche der beiden Stützen 16 müssen dann lediglich oberhalb der zugeordneten Zapfen 32 positioniert werden und langsam auf diese abgelassen werden.

Die Zapfen 32 treten in die unteren Endbereiche der rohrförmigen Stützen 12 ein. Aufgrund der Führung durch diese Zapfen 32 treten auch die Zapfen 34 in die zugeordneten Stützen 24 der Leiter 22 beziehungsweise der Leiterabschnitte 60 und 62 automatisch bei weiterem Ablassen ein. Die vergleichsweise kurzen Zapfen 40 im Bereich der mittleren Lagerstelle 30 können dann kurz vor dem vollständigen Abstellen der Plattformanordnung 10 auf dem Offshore-Bauwerk eingefädelt werden.

Sobald sowohl die unteren Zapfen 32 und 34 als auch die oberen Zapfen 40 jeweils mit den zugeordneten Gegenstücken der Plattformanordnung 10 in Eingriff stehen, ist die Plattformanordnung 10 richtig positioniert. Nun ist es nur noch erforderlich, die Flanschverbindungen im Bereich der mittleren Lagerstelle 30 und der oberen Lagerstelle 26 zu schließen. Da sich diese Lagerstellen 26, 28, 30 oberhalb der Wasseroberfläche zumindest bei mittlerem Wasserstand 102 befinden, lassen sie sich auf einfache Weise die entsprechenden Schraubverbindungen durch technisches Personal schließen. Aufgrund der Vorpositionierung durch konische Zapfen 32, 34 und 40 liegen die entsprechenden Flanschverbindungen bereits passend aneinander.

Die im Bereich der mittleren Lagerstelle 30 angeordneten Rohrflansche 58 lassen sich durch Personen von der Zwischenplattform 64 aus montieren. Die an der oberen Lagerstelle 26 angeordneten Flanschverbinder 48 und 50 lassen sich dagegen von der oberen Plattform 12 aus bedienen. Hiermit wird die Montage der Plattformanordnung 10 ermöglicht, ohne dass ein Einsatz unter Wasser, beispielsweise ein Tauchereinsatz, erforderlich ist.

Die Demontage der Plattformanordnung 10, beispielsweise zum Austausch defekter Teile, findet in umgekehrter Reihenfolge statt. Zunächst werden die Flanschverbinder 48 und 50 beziehungsweise der Rohrflansch 52 gelöst. Mittels der Tragösen 56 und eines Kranes lässt sich nunmehr die Plattformanordnung 10 nach oben aus den Verankerungen beziehungsweise dem Eingriff der Zapfen 32, 34 und 40 mit den Stützen 16 und 24 lösen und entfernen. Gegebenenfalls kann nunmehr eine Reparatur erfolgen oder eine alternative Plattformanordnung 10 wieder am Offshore-Bauwerk montiert werden.

## Patentansprüche

1. Plattformanordnung für ein Offshore-Bauwerk, mit einer Tragstruktur (14), wenigstens einer vorzugsweise horizontalen Plattform (12) an der Tragstruktur (14), wobei die Tragstruktur (14) versehen ist mit wenigstens einem vorzugsweise zumindest im Wesentlichen vertikalen Tragelement, insbesondere einem Stützelement beziehungsweise einer Stütze (16), zum Abstützen der Plattform (12) an einem Offshore-Bauwerk, und mit Verbindungselementen zum Befestigen der Tragstruktur (14) am Offshore-Bauwerk, wobei an der Tragstruktur (14) wenigstens ein Verbindungselement als Teil einer Steckverbindung zur Verbindung mit einem korrespondierenden Gegenstück am Offshore-Bauwerk ausgebildet ist.

2. Plattformanordnung nach Anspruch 1, **dadurch gekennzeichnet, dass** die Tragstruktur (14) mindestens eine Leiter (22), insbesondere mit mehreren Leiterabschnitten (60, 62), zum Besteigen der Plattform (12) aufweist.

3. Plattformanordnung nach einem der vorhergehenden Ansprüche, **dadurch gekennzeichnet, dass** mehrere, vorzugsweise wenigstens zwei Lagerstellen (26, 28, 30) zur Lagerung der Tragstruktur (14) am Offshore-Bauwerk vorgesehen sind, bevorzugt weist die Tragstruktur (14) drei Lagerstellen (26, 28, 30) auf, vorzugsweise eine obere, eine untere und eine mittlere Lagerstelle (26, 28, 30), wobei vorzugsweise je Lagerstelle wenigstens ein Verbindungselement vorgesehen ist.

4. Plattformanordnung nach einem der vorhergehenden Ansprüche, **dadurch gekennzeichnet, dass** wenigstens eine Zwischenplattform (64) vorgesehen ist, oder mehrere Zwischenplattformen (64) vorgesehen sind und die Zwischenplattformen (64) vorzugsweise auf unterschiedlicher Höhe über dem Meeresspiegel angeordnet sind, bevorzugt mit in etwa gleich großen Abständen zwischen den Zwischenplattformen (64), wobei vorzugsweise die Zwischenplattformen (64) seitlich versetzt zueinander ausgerichtet sind, wobei die Zwischenplattformen (64) vorzugsweise abwechselnd linksseitig und rechtsseitig des Turms beziehungsweise einer zentralen Leiter angeordnet sind.

5. Plattformanordnung nach einem der vorhergehenden Ansprüche, **dadurch gekennzeichnet, dass** das wenigstens eine, vorzugsweise untere, Verbindungselement, insbesondere die wenigstens eine Steckverbindung in zumindest im Wesentlichen vertikaler Richtung verbindbar oder lösbar ist, insbesondere steckbar.

6. Plattformanordnung nach einem der vorhergehenden Ansprüche, **dadurch gekennzeichnet, dass** wenigstens ein Verbindungselement am unteren Endbereich der Tragstruktur ausgebildet ist und/oder dass der untere Endbereich des wenigstens einen vertikalen Tragelements, insbesondere der Stütze, als Verbindungselement ausgebildet ist.

7. Plattformanordnung nach einem der vorhergehenden Ansprüche, **dadurch gekennzeichnet, dass** der untere Endbereich des wenigstens einen Tragelements beziehungsweise der Stütze (16, 24) derart als Verbindungselement ausgebildet ist, dass das wenigstens eine Tragelement am unteren Endabschnitt eine insbesondere kreisförmige Aufnahme für einen insbesondere konischen Halteabschnitt, insbesondere Zapfen (32, 34), am Offshore-Bauwerk aufweist, wobei der Querschnitt der Aufnahme vorzugsweise zumindest im Wesentlichen dem inneren Querschnitt des Tragelements entspricht.

8. Plattformanordnung nach einem der vorhergehenden Ansprüche, **dadurch gekennzeichnet, dass** das wenigstens eine obere Verbindungselement als Teil einer insbesondere verschraubbaren Flanschverbindung (48) insbesondere zur Befestigung am Offshore-Bauwerk ausgebildet ist, vorzugsweise mittels lösbaren Befestigungselementen, wie insbesondere Schrauben.

9. Plattformanordnung nach einem der vorhergehenden Ansprüche, **dadurch gekennzeichnet, dass** insbesondere je zwei Leiterabschnitte (60, 62) seitlich versetzt zueinander angeordnet sind, und/oder dass zwei Leiterabschnitte (60, 62) jeweils an einer gemeinsamen Zwischenplattform (64) enden, vorzugsweise nebeneinander angeordnet sind, wobei die Leiterabschnitte (60, 62) vorzugsweise in unterschiedlichen Richtungen verlaufen, wobei zwei Leiterabschnitte (60, 62) vorzugsweise in zumindest im Wesentlichen entgegengesetzten Richtungen verlaufen.

10. Plattformanordnung nach einem der vorhergehenden Ansprüche, **dadurch gekennzeichnet, dass** zwischen zwei Zwischenplattformen (64) wenigstens ein Leiterabschnitt (60, 62) angeordnet ist, und/oder dass jeweils zwei Zwischenplattformen (64) durch einen Leiterabschnitt (60, 62) verbindbar sind.

11. Plattformanordnung nach einem der Ansprüche 2 bis 10, **dadurch gekennzeichnet, dass** wenigstens ein Fangkorb (66) zur Absicherung einer die Leiter (22) beziehungsweise Leiterabschnitte (60, 62) benutzenden Person vorgesehen ist, wobei der Fangkorb (66) die Leiter oder zumindest einen der Leiterabschnitte (60, 62) zumindest teilweise umgibt und/oder die wenigstens eine Plattform (12, 64) eine Umzäunung (20, 74) aufweist.

12. Plattformanordnung nach einem der vorhergehenden Ansprüche, **dadurch gekennzeichnet, dass** die Verbindungselemente zwei längere konische Zapfen (32) und zwei kürzere konische Zapfen (34) aufweisen.

13. Plattformanordnung nach einem der vorhergehenden Ansprüche, **dadurch gekennzeichnet, dass** die Steckverbindung in einer solchen Höhe angeordnet ist, dass sie sich zumindest bei durchschnittlichem Wasserstand unterhalb Wasseroberfläche befinden.

14. Offshore-Bauwerk mit einer am Meeresboden verankerten Gründungsstruktur und mit wenigstens einer Plattformanordnung (10) nach einem der vorhergehenden Ansprüche, wobei die Gründungsstruktur vorzugsweise wenigstens einen Stützpfeiler (18) aufweist, **dadurch gekennzeichnet, dass** die Plattformanordnung (10) mittels einer lösbaren Steckverbindung mit der Gründungsstruktur verbunden ist, wobei vorzugsweise wenigstens ein Verbindungselement als Teil einer Steckverbindung zur Befestigung einer Plattformanordnung (10) insbesondere nach einem der Ansprüche 1 bis 11 vorgesehen ist.

15. Verfahren zum Installieren oder Deinstallieren einer Plattformanordnung nach einem der Ansprüche 1 bis 13 an einem Offshore-Bauwerk, insbesondere nach Anspruch 14, wobei die Plattformanordnung (10) vorzugsweise mittels eines Hebewerkzeugs, wie insbesondere eines Flugzeugs oder Krans, gehandhabt wird, **dadurch gekennzeichnet, dass** die Tragstruktur (14) der Plattformanordnung (10) mittels einer bei mittlerem Wasserstand (102) unter der Wasseroberfläche angeordneten Steckverbindung am Offshore-Bauwerk befestigt wird.

16. Verfahren nach Anspruch 15, **dadurch gekennzeichnet, dass** die Plattformanordnung (10) mit einem unteren Endbereich der Tragstruktur (14), insbesondere mit rohrförmigen Tragelementen, insbesondere Stützen (16, 24), auf am Offshore-Bauwerk angeordnete, insbesondere konische Steckverbinder, insbesondere Zapfen (32, 34, 40), aufgesetzt wird, wobei die Steckverbinder oder Zapfen (32, 34, 40) vorzugsweise zumindest bei durchschnittlichem Wasserstand (102) im Wesentlichen unter der Wasseroberfläche angeordnet werden.

17. Verfahren nach einem der Ansprüche 15 bis 16, **dadurch gekennzeichnet, dass** die Plattformanordnung (10) mit einem vorzugsweise oberen Endbereich, vorzugsweise oberhalb der Wasseroberfläche bei mittlerem Wasserstand (102) an Verbindungselemente, insbesondere verschraubbare Flansche, zum Verbinden angelegt wird.

## Claims

1. Platform assembly for an offshore structure, having a carrying structure (14), at least one preferably horizontal platform (12) on the carrying structure (14), wherein the carrying structure (14) is provided with at least one preferably at least substantially vertical carrying element, in particular a supporting element or a support (16), for supporting the platform (12) on an offshore structure, and having connecting elements for fastening the carrying structure (14) to the offshore structure, wherein at least one connecting element as part of a plug-in connection for connecting to a corresponding counterpart on the offshore structure is formed on the carrying structure (14).

2. Platform assembly according to Claim 1, **characterized in that** the carrying structure (14) has at least one ladder (22), in particular having a plurality of ladder sections (60, 62), for climbing onto the platform (12).

3. Platform assembly according to either of the preceding claims, **characterized in that** a plurality of, preferably at least two bearing points (26, 28, 30), are provided for mounting the carrying structure (14) on the offshore structure, the carrying structure (14) preferably having three bearing points (26, 28, 30), preferably an upper, a lower and a central bearing point (26, 28, 30), wherein preferably at least one connecting element is provided for each bearing point.

4. Platform assembly according to one of the preceding claims, **characterized in that** at least one intermediate platform (64) is provided, or a plurality of intermediate platforms (64) are provided, and the intermediate platforms (64) are preferably arranged at different heights above the sea level, preferably with approximately equalsized spacings between the intermediate platforms (64), wherein preferably the intermediate platforms (64) are oriented so as to be laterally offset from one another, wherein the intermediate platforms (64) are preferably arranged in alternating fashion on the left side and right side of the tower or on a central ladder.

5. Platform assembly according to one of the preceding claims, **characterized in that** the at least one, preferably lower, connecting element, in particular the at least one plug connection, can be connected or released, in particular can be plugged, in at least a substantially vertical direction.

6. Platform assembly according to one of the preceding claims, **characterized in that** at least one connecting element is formed on the lower end region of the carrying structure and/or **in that** the lower end region of the at least one vertical carrying element, in particular of the support, is formed as a connecting element.

7. Platform assembly according to one of the preceding claims, **characterized in that** the lower end region of the at least one carrying element or of the support (16, 24) is formed as a connecting element in such a way that the at least one carrying element has, on the lower end section, an in particular circular receptacle for an in particular conical retaining section, in particular a spigot (32, 34), on the offshore structure, wherein the cross section of the receptacle preferably corresponds at least substantially to the inner cross section of the carrying element.

8. Platform assembly according to one of the preceding claims, **characterized in that** the at least one upper connecting element is formed as part of an in particular screwable flange connection (48), in particular for fastening to the offshore structure, preferably by means of releaseable fastening elements, such as in particular screws.

9. Platform assembly according to one of the preceding claims, **characterized in that** in particular in each case two ladder sections (60, 62) are arranged so as to be laterally offset from one another, and/or in that two ladder sections (60, 62) in each case end on a common intermediate platform (64), preferably being arranged next to one another, wherein the ladder sections (60, 62) preferably run in different directions, wherein two ladder sections (60, 62) preferably run in at least substantially opposite directions.

10. Platform assembly according to one of the preceding claims, **characterized in that** at least one ladder section (60, 62) is arranged between two intermediate platforms (64), and/or **in that** in each case two intermediate platforms (64) can be connected by a ladder section (60, 62).

11. Platform assembly according to one of Claims 2 to 10, **characterized in that** at least one safety gauge (66) is provided for safeguarding a person using the ladder (22) or ladder sections (60, 62), wherein the safety gauge (66) at least partially surrounds the ladder or at least one of the ladder sections (60, 62) and/or the at least one platform (12, 64) has a ring fence (20, 74).

12. Platform assembly according to one of the preceding claims, **characterized in that** the connecting elements have two relatively long conical spigots (32) and two relatively short conical spigots (34).

13. Platform assembly according to one of the preceding claims, **characterized in that** the plug-in connection is arranged at such a height as to be situated, at least with average water level, below the water surface.

14. Offshore structure having a foundation structure, which is anchored on the seabed, and having at least one platform assembly (10) according to one of the preceding claims, wherein the foundation structure preferably has at least one supporting pillar (18), **characterized in that** the platform assembly (10) is connected to the foundation structure by means of a releasable plug-in connection, wherein preferably at least one connecting element is provided as part of a plug-in connection for fastening a platform assembly (10) in particular according to one of Claims 1 to 11.

15. Method for installing or deinstalling a platform assembly according to one of Claims 1 to 13 on or from an offshore structure, in particular according to Claim 14, wherein the platform assembly (10) is preferably handled by means of a lifting mechanism, such as in particular an aircraft or crane, **characterized in that** the carrying structure (14) of the platform assembly (10) is fastened to the offshore structure by means of a plug-in connection which, with average water level (102), is arranged below the water surface.

16. Method according to Claim 15, **characterized in that** the platform assembly (10) is placed by a lower end region of the carrying structure (14), in particular by tubular carrying elements, in particular supports (16, 24), onto in particular conical plug connectors, in particular spigots (32, 34, 40), arranged on the offshore structure, wherein the plug connectors or spigots (32, 34, 40) are preferably arranged, at least with average water level (102), substantially below the water surface.

17. Method according to either of Claims 15 and 16, **characterized in that** the platform assembly (10) is applied by a preferably upper end region, preferably above the water surface with average water level (102), to connecting elements, in particular screwable flanges, for connection.

## Revendications

1. Ensemble plate-forme pour une construction offshore, comportant une structure porteuse (14), au moins une plate-forme (12) de préférence horizontale sur la structure porteuse (14), la structure porteuse (14) étant dotée d'au moins un élément porteur de préférence au moins sensiblement vertical, en particulier d'un élément de support ou d'un poteau (16), servant à supporter la plate-forme (12) sur une construction offshore, et comportant des éléments de liaison servant à fixer la structure porteuse (14) à la construction offshore,
au moins un élément de liaison étant réalisé sur la structure porteuse (14) comme partie d'une liaison enfichable servant à la liaison à une pièce conjuguée correspondante sur la construction offshore.

2. Ensemble plate-forme selon la revendication 1, **caractérisé en ce que** la structure porteuse (14) comprend au moins une échelle (22), en particulier dotée de plusieurs parties d'échelle (60, 62), servant à faire l'ascension de la plate-forme (12).

3. Ensemble plate-forme selon l'une des revendications précédentes, **caractérisé en ce que** plusieurs, de préférence deux points d'appui (26, 28, 30) servant au montage de la structure porteuse (14) sur la construction offshore sont prévus, de préférence la structure porteuse (14) comprend trois points d'appui (26, 28, 30), de préférence un point d'appui supérieur, un point d'appui inférieur et un point d'appui central (26, 28, 30), de préférence au moins un élément de liaison étant prévu pour chaque point d'appui.

4. Ensemble plate-forme selon l'une des revendications précédentes, **caractérisé en ce qu'**au moins une plate-forme intermédiaire (64) est prévue, ou plusieurs plates-formes intermédiaires (64) sont prévues et les plates-formes intermédiaires (64) sont disposées de préférence à des hauteurs différentes au-dessus du niveau de la mer, de préférence avec des distances approximativement égales entre les plates-formes intermédiaires (64), les plates-formes intermédiaires (64) étant de préférence orientées de manière décalée latéralement les unes par rapport aux autres, les plates-formes intermédiaires (64) étant disposées de préférence en alternance à gauche et à droite de la tour ou d'une échelle centrale.

5. Ensemble plate-forme selon l'une des revendications précédentes, **caractérisé en ce que** l'au moins un élément de liaison, de préférence inférieur, en particulier l'au moins une liaison enfichable, peut être relié(e) ou peut être détaché(e), en particulier peut être enfiché(e), dans la direction au moins sensiblement verticale.

6. Ensemble plate-forme selon l'une des revendications précédentes, **caractérisé en ce qu'**au moins un élément de liaison est réalisé au niveau de la région d'extrémité inférieure de la structure porteuse et/ou **en ce que** la région d'extrémité inférieure de l'au moins un élément porteur vertical, en particulier du poteau, est réalisée sous forme d'élément de liaison.

7. Ensemble plate-forme selon l'une des revendications précédentes, **caractérisé en ce que** la région d'extrémité inférieure de l'au moins un élément porteur ou du poteau (16, 24) est réalisée sous forme d'élément de liaison de telle sorte que l'au moins un élément porteur comprend, au niveau de la partie d'extrémité inférieure, un logement en particulier circulaire pour une partie de retenue en particulier conique, en particulier un tenon (32, 34), sur la construction offshore, la section transversale du logement correspondant de préférence au moins sensiblement à la section transversale intérieure de l'élément porteur.

8. Ensemble plate-forme selon l'une des revendications précédentes, **caractérisé en ce que** l'au moins un élément de liaison supérieur est réalisé comme partie d'une liaison à brides (48) en particulier pouvant être vissée, en particulier pour la fixation à la construction offshore, de préférence au moyen d'éléments de fixation amovibles, comme en particulier des vis.

9. Ensemble plate-forme selon l'une des revendications précédentes, **caractérisé en ce qu'**en particulier respectivement deux parties d'échelle (60, 62) sont disposées de manière décalée latéralement l'une par rapport à l'autre, et/ou **en ce que** deux parties d'échelle (60, 62) se terminent respectivement au niveau d'une plate-forme intermédiaire (64) commune, de préférence sont juxtaposées, les parties d'échelle (60, 62) s'étendant de préférence dans des directions différentes, deux parties d'échelle (60, 62) s'étendant de préférence dans des directions au moins sensiblement opposées.

10. Ensemble plate-forme selon l'une des revendications précédentes, **caractérisé en ce qu'**au moins une partie d'échelle (60, 62) est disposée entre deux plates-formes intermédiaires (64), et/ou **en ce que** respectivement deux plates-formes intermédiaires (64) peuvent être reliées par une partie d'échelle (60, 62).

11. Ensemble plate-forme selon l'une des revendications 2 à 10, **caractérisé en ce qu'**au moins une crinoline (66) servant à assurer la sécurité d'une personne utilisant l'échelle (22) ou les parties d'échelle (60, 62) est prévue, la crinoline (66) entourant au moins partiellement l'échelle ou au moins l'une des parties d'échelle (60, 62) et/ou l'au moins une plate-forme (12, 64) comprenant une clôture (20, 74).

12. Ensemble plate-forme selon l'une des revendications précédentes, **caractérisé en ce que** les éléments de liaison comprennent deux tenons coniques (32) plus longs et deux tenons coniques (34) plus courts.

13. Ensemble plate-forme selon l'une des revendications précédentes, **caractérisé en ce que** la liaison enfichable est disposée à une hauteur telle qu'elle se trouve en dessous de la surface de l'eau au moins en cas de niveau d'eau moyen.

14. Construction offshore comportant une structure de fondation ancrée sur le fond marin et comportant au moins un ensemble plate-forme (10) selon l'une des revendications précédentes, la structure de fondation comprenant de préférence au moins un pilier de soutien (18), **caractérisée en ce que** l'ensemble plate-forme (10) est relié à la structure de fondation au moyen d'une liaison enfichable libérable, de préférence au moins un élément de liaison étant prévu comme partie d'une liaison enfichable servant à la fixation d'un ensemble plate-forme (10) en particulier selon l'une des revendications 1 à 11.

15. Procédé d'installation ou de désinstallation d'un ensemble plate-forme selon l'une des revendications 1 à 13 sur une construction offshore, en particulier selon la revendication 14, l'ensemble plate-forme (10) étant manipulé de préférence au moyen d'un appareil de levage, comme en particulier un aéronef ou une grue, **caractérisé en ce que** la structure porteuse (14) de l'ensemble plate-forme (10) est fixée à la construction offshore au moyen d'une liaison enfichable disposée en dessous de la surface de l'eau en cas de niveau d'eau (102) moyen.

16. Procédé selon la revendication 15, **caractérisé en ce que** l'ensemble plate-forme (10) est placé par une région d'extrémité inférieure de la structure porteuse (14), en particulier par des éléments porteurs tubulaires, en particulier des poteaux (16, 24), sur des connecteurs enfichables en particulier coniques disposés sur la construction offshore, en particulier des tenons (32, 34, 40), les connecteurs enfichables ou tenons (32, 34, 40) étant disposés sensiblement en dessous de la surface de l'eau de préférence au moins en cas de niveau d'eau (102) moyen.

17. Procédé selon l'une des revendications 15 et 16, **caractérisé en ce que** l'ensemble plate-forme (10) est appliqué, par une région d'extrémité de préférence supérieure, de préférence au-dessus de la surface de l'eau en cas de niveau d'eau (102) moyen, contre des éléments de liaison, en particulier des brides pouvant être vissées, servant à la liaison.
